# EUROPEAN PATENT SPECIFICATION

(11) **EP 4 461 489 B1**
(45) Date of publication and mention of the grant of the patent: **10.09.2025**
(21) Application number: 24175111.4
(22) Date of filing: 10.05.2024
(51) Int. Cl.: B27G 13/12, B23C 5/22, B23C 5/26, B23C 5/20, B27G 13/00, B23C 5/12

(54) **SINGLE-PIECE CUTTER**
EINSTÜCKIGE SCHNEIDE
FRAISE MONOBLOC

(30) Priority: 10.05.2023 IT 202300009303
(43) Date of publication of application: 13.11.2024
(73) Proprietor: TWT S.r.l., 38068 Rovereto (TN) (IT)
(72) Inventor: PELLITTERI, Filippo, 38068 ROVERETO (TN) (IT)
(74) Representative: Burchielli, Riccardo

(56) References cited:
- EP-A1- 3 628 459
- WO-A1-2009/068296
- US-A- 5 800 079

## Description

The present invention concerns a single-piece cutter with cutting inserts for working wood or similar and refers, more particularly, to a single-body cutting cutter.

The cutters described by the present invention are particularly suitable for processing window frames or the like which have complex profiles to machine. Known cutters include cutter bodies capable of being rotated and a series of cutting inserts mounted on the periphery of such bodies, with a substantially radial arrangement.

These cutters are generally used for processing profiles of wooden elements as in the case of window and door processing.

In fact, the window profiles can present a plurality of re-entrant and protruding elements due to the aesthetic appeal and functionality of the object itself.

To date, there is no cutter on the market capable of processing such a profile with a single cutter body.

In fact, according to the known art, to carry out these processes it is possible to use two different working methods.

A first method involves the use of a cutter that includes multiple cutter bodies arranged in contact with each other, one on top of the other, and each one designed to machine a single protrusion or recess of the window.

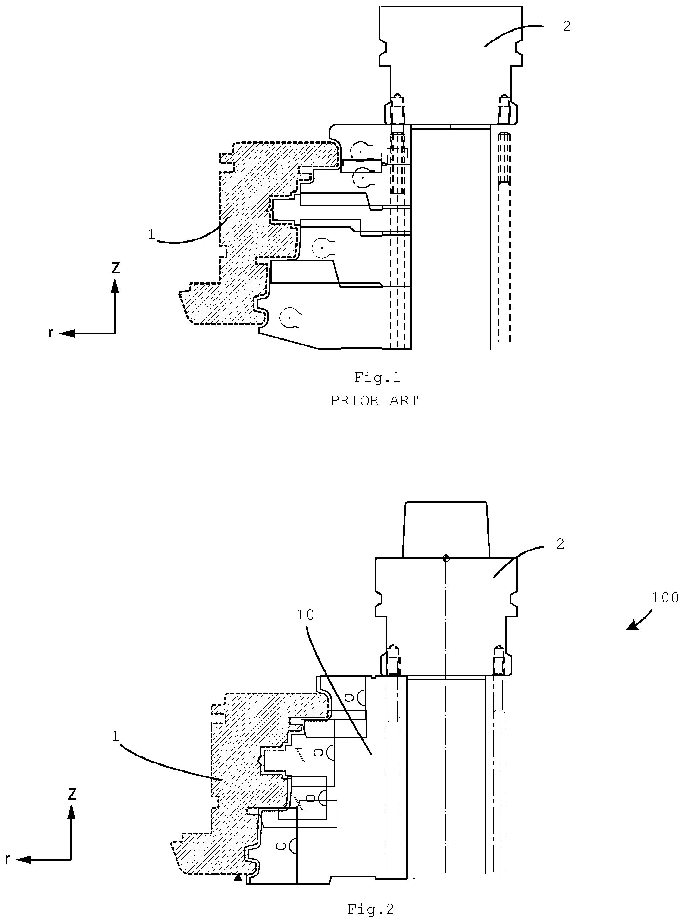

Figure 1A shows a traditional cutter being machined on a complex profile that has a large number of recesses and protrusions.

As can be seen in this figure, to carry out this process with precision and effectiveness it is necessary to join several cutter bodies, in this case five, and work perpendicular to the profile of the window.

This process involves some disadvantages due to the connection of the different cutter bodies. In fact, during the rotation of the cutter, the different bodies can make minimal oscillations or small movements which could damage and permanently ruin the entire profile of the window to be treated.

Furthermore, if at a later time it is necessary to use only one of the cutter bodies, it is necessary for an operator to disassemble the different cutter bodies and then subsequently have to assemble them as needed.

These operations, being inconvenient to carry out, lead to a waste of time and increase the risk of damaging the cutter bodies and cutting inserts during the various assembly and disassembly phases.

Alternatively, it would be possible to work the profile with a single small tool, following the design of the recesses and protrusions to be obtained. This procedure involves a considerable use of time and considerable risks of incurring errors in the creation of such protrusions or recesses.

However, it is not always possible to have a single tool available that is suitable for machining the different protrusions or recesses of the profile.

Furthermore, this process, being so complicated and laborious, is not suitable for an automated machine but must necessarily be carried out manually by a specialized operator. This disadvantage entails further costs and risks due to the dexterity of the operator who must keep the tool in the correct position throughout the entire profile processing.

Furthermore, a single tool may not be able to work correctly on the different recesses and protrusions of the profile you want to obtain, further increasing the risk of damage and breakage to the profile itself.

Known cutters include cutting inserts, also called knives, which can be shaped as needed and which are placed and fixed individually inside slots obtained peripherally in the body of the cutter at desired angles.

Since the knives, when they work, are subject to a tilting moment in the opposite direction to the advancement due to the resistance they encounter in cutting the piece being processed and to the centrifugal force deriving from the rotation of the cutter, each of the aforementioned knives is blocked on the body of the cutter in order to counteract these forces to ensure precise and permanent alignment. Usually, each knife is associated in a removable way with the cutter bodies in correspondence with a relative seat, by means of one or more locking elements or plugs and at least one screw, which locks it by pressure on a wall of this slot.

In consideration of the fact that the knives must be replaced periodically, it is important that the milling tools allow quick and easy assembly and disassembly operations of the knives, even on the machine, while still guaranteeing their precise and stable locking on the main body, even in consideration of the high cutting speeds and the related centrifugal forces generated.

One of the examples of the prior art is the cutter described in EP 3 628 459, in which a traditional cutter is described, made to be used in association with other cutters in an assembly made of Each cutter performs a corresponding work on the wood. The aim of the present invention is, therefore, to overcome the above-mentioned drawbacks and, in particular, to create a single-piece cutter for woodworking, which allows different cutting, engraving and/or shaving operations to be carried out using a single body.

Another purpose of the present invention is to create a single-piece milling cutter for woodworking, which has a reduced number of components, compared to the prior art, and which therefore has a significant construction economy, as well as greater precision in processing, compared to traditional structures and techniques. Another purpose of the present invention is to create a single-piece cutter for woodworking, which allows high-speed performance while ensuring high safety and the generation of less noise compared to the prior art.

A further purpose of the present invention is to create a single-piece cutter for woodworking, which allows processing without imprecision and with less effort on the part of the users.

These and other purposes, according to the present invention, are achieved by creating a single-piece cutter for woodworking, according to the attached claim 1; other detailed technical characteristics of the single-piece cutter, according to the present invention, are reported in the dependent claims.

Further characteristics and advantages of the single-piece cutter for woodworking, which is the object of the present invention, will be more evident from the following description of the single-piece cutter in question and referred to the attached drawings, in which:
- figure 1 is a side view of a traditional cutter made with five different cutter bodies applied on a rotating machine and being worked on a wooden profile;
- figure 2 is a side view of a cutter according to the invention made with a single cutter body and applied on a rotating machine and being worked on a wooden profile;
- figure 3 is a sectional view of the single-piece cutter according to the invention;
- figure 4 is a side view of the single-piece cutter according to the invention;
- figure 5 is a perspective view of the single-piece cutter according to the invention;
- figure 6 is a top view of the single-piece cutter according to the invention;
- figures 7A and 7B show the phase of unscrewing the screws for removing the removable inserts, according to the invention;
- figure 8A is a top view of the containment element which keeps a removable element in position, according to the invention;
- figure 8B shows the opening of the containment element of the single-piece cutter, according to the invention;
- figure 8C shows the insertion of a removable insert into a containment element of the single-piece cutter, according to the invention.

Below, the Z axis refers to the axis around which the cutter is configured to rotate, perpendicular to the Z axis a plane is defined which is identified by the polar coordinates r and θ where r indicates the distance from the origin, and θ indicates the angle, in a traditional cylindrical coordinate system. The positive direction of the Z axis is essentially the one that departs from the base of the spindle to which the cutter is intended to be fixed.

With reference to figure 1, a traditional cutter is represented comprising five cutter bodies or blocks connected to each other for processing a wooden profile 1 such as, for example, the profile of a window and door. In particular, note how the cutter bodies are overlapped along the Z axis, and each include knives positioned and inclined in order to obtain different processes on a workpiece.

More in detail, traditional cutters, as visible in figure 1A, necessarily include two or more bodies or blocks used for processing profile 1 depending on the shapes you want to obtain.

Referring to the figures above, the single-piece cutter object of the invention is indicated with the numerical reference 100 and includes a rotating work tool 2 and a milling element, preferably made of steel or aluminum alloy and preferably substantially cylindrical in shape.

Conveniently, it is clear from the figures that the cutter body 10 is substantially composed of a plurality of cylindrical elements 10', 10" with different heights and base diameters, preferably with base diameters that decrease as the Z coordinate increases.

Conveniently, the single-piece cutter according to the invention can have a development along the Z axis of more than 10 cm.

Referring to figure 2, the milling element of the single-piece cutter 100 is made with a single body 10 for processing a wooden profile 1.

This profile 1 can be, by way of example, a profile of a wooden window.

Referring to figure 2, the single body 10 is configured to be fixed, by means of appropriate fixing means, to a rotating work tool 2 particularly suitable for housing the single body 10 during the processing phase.

More specifically, the single body 10 has, in its central portion, a through hole 11 for inserting the same single body 10 into the rotating work tool 2.

This through hole 11 is arranged along the entire vertical extension of the single body 10 and allows for convenient insertion of the same into the rotating work tool 2.

Even more in detail, the single body 10 includes suitable holes for the insertion of the aforementioned fixing means suitable for fixing the same single body 10 to the work tool 2 and maintaining a correct position during the work phase.

In this way the single-piece cutter 100 is able to avoid oscillations and maintain the correct position with respect to profile 1 even when it is in high-speed working conditions and in contact with the same profile 1.

In fact, to machine complex profiles 1 with different perimeter shapes along the extension of the profile 1 itself, in traditional cutters, it is necessary to use at least two different cutter bodies which must be positioned correctly by an operator before the profile 1 processing phase and which they can be a source of imperfections and damage to profile 1 itself.

In a further embodiment, the rotating work tool 2 and the single body 10 of the single-piece cutter 100 can be made with a single piece.

According to the invention, the single-piece cutter 100 allows machining of profile 1 without any imperfection of incorrect positioning of the cutter body during installation or machining.

Again advantageously, the creation in a single body 10 speeds up and simplifies the preparation and installation operations of the single-piece cutter 100.

Even more advantageously, the construction of the single-piece cutter 100 with a single body 10 increases the safety of the cutter and reduces noise, in particular during high-speed machining.

Advantageously, the single-piece cutter 100 according to the invention can comprise a plurality of seats 16 configured to house, at least partially, a plurality of removable tools 13. Conveniently, the single-piece cutter can comprise a plurality of different seats 16, each configured to house, at least partially, a different removable tool 13 - i.e. configured to obtain a different processing. In particular, there may be a first series of seats 16', configured to house a first series of substantially equivalent removable tools 13' - i.e. configured to obtain substantially equivalent processing -, and a second series 16" configured to house a second plurality of substantially equivalent removable tools 13'. Conveniently, each series can include a plurality of 16" seats positioned at the same Z coordinate, but at different angular coordinates θ. Conveniently therefore there can be a plurality of series of 16', 16" different seats at the same Z coordinate, but at different θ coordinates. Preferably there can be at least two seats, and preferably at least two series of seats, at different Z coordinates, thus defining a single-piece milling cutter with multiple planes.

Advantageously, in the case in which there are several seats 16 of the same series, and therefore at the same Z coordinate, these can be equi-spaced along the θ coordinate.

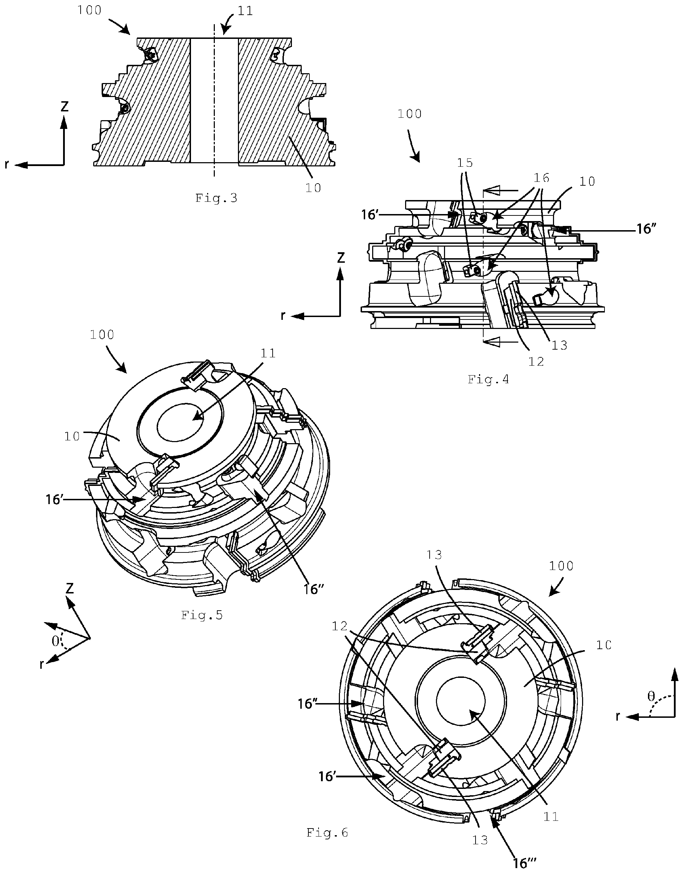

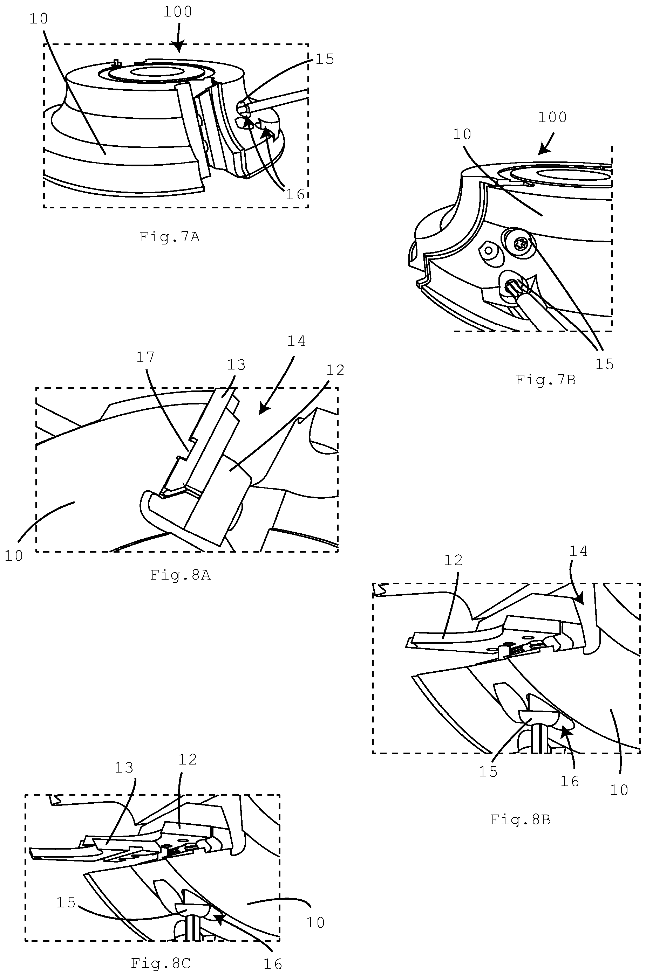

In particular, therefore, the single-piece milling cutter is configured to carry out different processes on the same piece at the same time, at different Z coordinates. Advantageously, in particular in the case in which the cutter body 10 is composed of three elements 10', 10", 10‴, the seats defined in the central element may not be open either above or below, as is clearly shown in the figure 3 or 4. As visible in figure 4 and in figures 7-8C, the single-piece cutter 100 has a plurality of containment elements 12 suitable for containing and maintaining in position the removable tools 13 consisting of cutting inserts or knives.

The number of removable tools 13 depends on the type and quality of the operations to be carried out (cutting, engraving, shaving, etc.).

More in detail, as visible in figure 8A, the containment elements 12 are arranged inside respective seats 14 made in the single body 10 of the single-piece cutter 100. In particular, the seats 14 are made on the external side wall of the single body 10. Referring to figure 8, it is visible how the containment elements 12 exert pressure on the removable tools 13 in such a way as to keep them in position.

As visible in figures 8B and 8C, each containment element 12 is regulated by adjustment screws 15 which, through their action, determine the opening and closing of the respective containment element 12 and therefore the insertion and removal of the removable tools 13.

In other words, the containment elements 12 pass from a closed configuration in which they keep the removable tools 13 in position to an open configuration in which it is possible to insert or remove said removable tools 13. The passage from the closed configuration to the open configuration is determined by user action on the adjustment screws 15.

In fact, to remove the removable tools 13, a user must act on the adjustment screws 15, using a suitable tool such as a wrench or screwdriver, to unscrew the adjustment screws 15 themselves and open the containment element 12.

By unscrewing the adjustment screws 15, the seal of the containment element 12 is loosened and it is possible to remove the removable tool 13.

In the opposite way, once the removable tool 13 has been replaced or reinserted, by tightening the adjustment screws 15 it is possible to close the containment element 12, blocking the removable element 13 in the correct position. Advantageously, the action on the adjustment screws 15 by the operator allows a marked movement of the containment element 12.

In this way the insertion and removal operations of the removable tools 13 are facilitated and errors due to incorrect positioning of the same are reduced.

The adjustment screws 15 are arranged in further seats 16, made on the single body 10, so as to prevent them from coming into contact with the profile 1 during processing and so as to allow easy access to the same screws 15 by a user. More in detail, the seats 16 are arranged close to the seats 14 so that the adjustment screws 15 act perpendicularly on the containment elements 12.

Advantageously, to prevent the removable tools 13 from escaping from the containment elements 12, when the cutter 100 is in the working phase, grooves 17 are made on the single body 10 suitable for keeping said removable tools 13 in position.

More in detail, said grooves 17 are made vertically inside said seats 14.

It was thus found that the solution which is the object of the present invention allows the preset objectives to be achieved and, in particular, allows the use of a single-piece cutter 100 with a single body 10 for multiple wood processing operations (shaving, engraving, cutting, etc.), also allowing the cutter itself to work at the high peripheral speeds required by new machinery with an increase in productivity and a good finish.

The removable tools 13 are interchangeable and have a radial fixing, so as to obtain further advantages from the point of view of accessibility for the operator during maintenance and/or replacement operations of the removable tools 13 themselves.

Furthermore, thanks to the containment elements 12 it is possible to easily insert and remove the removable tools 13 from the single body 10.

Further advantages, resulting from the use of a single-piece cutter 100 with a single body 10, are represented by the fact that fewer tolerances are found in the construction of the cutter, compared to the known art, according to which the cutters have multiple assembled bodies where the related inserts.

From the description given, the characteristics of the single-piece cutter 100 and of the single body 10, the object of the invention, are clear, just as the advantages are clear.

Finally, it is clear that numerous other variations can be made to the device in question, without departing from the principles of novelty inherent in the inventive idea, just as it is clear that, in the practical implementation of the invention, the materials, shapes and the dimensions of the illustrated details may be any according to needs and they may be replaced with other equivalent ones.

Where the features and techniques mentioned in any claims are followed by reference marks, such reference marks have been included for the sole purpose of increasing the intelligibility of the claims and, accordingly, such reference marks have no limiting effect on the interpretation of each element identified by way of example by these reference signs.

## Claims

1. Cutter (100) for woodworking, comprising a rotating work tool (2) and a milling element inserted into said rotary work tool (2), wherein said milling element in turn comprises removable tools (13) configured to obtain a plurality of different processes on the same piece at the same time and in which said milling cutter is **characterized by** the fact that said milling element is made with a body single body (10).

2. Cutter (100) as in claim 1 **characterized by** the fact that said removable tools (13) are contained in respective containment elements (12) which keep said removable tools (13) in position.

3. Cutter (100) as in claim 2 **characterized by** the fact that said containment elements (12) are arranged in respective first seats (14) made on the external side wall of said single body (10).

4. Cutter (100) as in claim 2 **characterized by** the fact that said containment elements (12) vary their position from a closed configuration in which they keep said removable tools (13) in position to an open configuration in which it is possible to insert or remove said removable tools (13).

5. Cutter (100) as in claim 4 **characterized by** the fact that the variation from said closed configuration to said open configuration is implemented by means of the action of a user on specific adjustment screws (15) connected to said containment elements (12).

6. Cutter (100) as in claim 5 **characterized by** the fact that said adjustment screws (15) are inserted into special second seats (16) so that said adjustment screws (15) are perpendicular to said containment elements (12).

7. Cutter (100) as per one of the previous claims **characterized by** the fact that said single body (10) has a through hole (11) suitable to allow the insertion of said single body (10) into said work tool (2).

8. Cutter (100) as per one of the previous claims **characterized by** the fact that said single body (10) has grooves (17) designed to prevent the escape of said removable tools (13) from said containment elements (12) when said cutter (100) is being worked on.

9. Cutter (100) as in claim 8 **characterized by** the fact that said grooves (17) are arranged vertically inside said first seats (14).

10. Cutter (100) as per one of the previous claims **characterized by** the fact that it is particularly suitable for processing window frames or the like.

11. Cutter (100) as one or more of the previous claims **characterized by** the fact of comprising at least two series of seats (16) each configured to house a corresponding series of removable tools (13), and **characterized by** the fact that each series of removable tools (13') is configured to obtain a different processing on a piece.

12. Cutter (100) as one or more of the previous claims **characterized by** the fact that said each of said series of seats (16) is located at a different Z coordinate.

13. Cutter (100) as one or more of the previous claims **characterized by** the fact that said body of the cutter (10) is made up of a plurality of substantially cylindrical elements superimposed.

14. Cutter (100) as one or more of the previous claims **characterized by** the fact that said seats (16) belonging to the same series are equally spaced along the θ coordinate.

15. Cutter (100) as one or more of the previous claims **characterized by** the fact that at least one of said seats (16), and preferably of said series of seats (16) is closed both above and below.

## Patentansprüche

1. Schneide (100) für die Holzbearbeitung, die ein rotierendes Arbeitswerkzeug (2) und ein Fräselement umfasst, das in das rotierende Arbeitswerkzeug (2) eingesetzt ist, wobei das Fräselement wiederum entfernbare Werkzeuge (13) umfasst, die so konfiguriert sind, dass sie eine Vielzahl von verschiedenen Bearbeitungen an demselben Stück zur gleichen Zeit durchführen können, und wobei der Fräser **dadurch gekennzeichnet ist, dass** das Fräselement mit einem einzigen Körper (10) hergestellt ist.

2. Schneide (100) nach Anspruch 1, **dadurch gekennzeichnet, dass** die abnehmbaren Werkzeuge (13) in entsprechenden Aufnahmeelementen (12) enthalten sind, die die abnehmbaren Werkzeuge (13) in Position halten.

3. Schneide (100) nach Anspruch 2, **dadurch gekennzeichnet, dass** die Rückhalteelemente (12) in entsprechenden ersten Sitzen (14) angeordnet sind, die an der äußeren Seitenwand des einzelnen Körpers (10) ausgebildet sind.

4. Schneide (100) nach Anspruch 2, **dadurch gekennzeichnet, dass** die Aufnahmeelemente (12) ihre Position von einer geschlossenen Konfiguration, in der sie die herausnehmbaren Werkzeuge (13) in Position halten, zu einer offenen Konfiguration ändern, in der es möglich ist, die herausnehmbaren Werkzeuge (13) einzusetzen oder zu entfernen.

5. Schneide (100) nach Anspruch 4, **dadurch gekennzeichnet, dass** die Änderung von der geschlossenen Konfiguration in die offene Konfiguration durch die Einwirkung eines Benutzers auf bestimmte Einstellschrauben (15) erfolgt, die mit den Begrenzungselementen (12) verbunden sind.

6. Schneide (100) nach Anspruch 5, **dadurch gekennzeichnet, dass** die Einstellschrauben (15) in spezielle zweite Sitze (16) eingesetzt sind, so dass die Einstellschrauben (15) senkrecht zu den Einschlusselementen (12) stehen.

7. Schneide (100) nach einem der vorhergehenden Ansprüche, **dadurch gekennzeichnet, dass** der Einzelkörper (10) ein Durchgangsloch (11) aufweist, das geeignet ist, das Einsetzen des Einzelkörpers (10) in das Arbeitswerkzeug (2) zu ermöglichen.

8. Schneide (100) nach einem der vorhergehenden Ansprüche, **dadurch gekennzeichnet, dass** der einzige Körper (10) Nuten (17) aufweist, die dazu bestimmt sind, das Entweichen der entfernbaren Werkzeuge (13) aus den Aufnahmeelementen (12) zu verhindern, wenn die Schneide (100) bearbeitet wird.

9. Schneide (100) nach Anspruch 8, **dadurch gekennzeichnet, dass** die Nuten (17) vertikal innerhalb der ersten Sitze (14) angeordnet sind.

10. Schneide (100) nach einem der vorhergehenden Ansprüche, **dadurch gekennzeichnet, dass** es insbesondere zur Bearbeitung von Fensterrahmen oder dergleichen geeignet ist.

11. Schneide (100) nach einem oder mehreren der vorhergehenden Ansprüche, **gekennzeichnet durch** die Tatsache, dass sie mindestens zwei Reihen von Sitzen (16) umfasst, die jeweils so konfiguriert sind, dass sie eine entsprechende Reihe von herausnehmbaren Werkzeugen (13) aufnehmen, und **gekennzeichnet durch** die Tatsache, dass jede Reihe von herausnehmbaren Werkzeugen (13') so konfiguriert ist, dass sie eine andere Bearbeitung an einem Stück erzielt.

12. Schneide (100) nach einem oder mehreren der vorhergehenden Ansprüche, **dadurch gekennzeichnet, dass** jede der Reihen von Sitzen (16) an einer anderen Z-Koordinate angeordnet ist.

13. Schneide (100) nach einem oder mehreren der vorhergehenden Ansprüche, **dadurch gekennzeichnet, dass** der Körper des Schneidwerkzeugs (10) aus einer Vielzahl von im Wesentlichen zylindrischen Elementen besteht, die übereinander angeordnet sind.

14. Schneide (100) nach einem oder mehreren der vorhergehenden Ansprüche, **dadurch gekennzeichnet, dass** die Sitze (16), die zu derselben Serie gehören, entlang der Koordinate θ gleichmäßig beabstandet sind.

15. Schneide (100) nach einem oder mehreren der vorhergehenden Ansprüche, **dadurch gekennzeichnet, dass** mindestens einer der Sitze (16), vorzugsweise eine Reihe von Sitzen (16), sowohl oben als auch unten geschlossen ist.

## Revendications

1. Fraise (100) pour le travail du bois, comprenant un outil de travail rotatif (2) et un élément de fraisage inséré dans ledit outil de travail rotatif (2), dans lequel ledit élément de fraisage comprend à son tour des outils amovibles (13) configurés pour obtenir une pluralité de processus différents sur la même pièce en même temps et dans lequel ladite fraise est **caractérisée en ce que** ledit élément de fraisage est constitué d'un corps unique (10).

2. Fraise (100) selon la revendication 1 **caractérisée en ce que** lesdits outils amovibles (13) sont contenus dans des éléments de confinement respectifs (12) qui maintiennent lesdits outils amovibles (13) en position.

3. Fraise (100) selon la revendication 2 **caractérisée en ce que** lesdits éléments de confinement (12) sont disposés dans de premiers sièges respectifs (14) réalisés sur la paroi latérale externe dudit corps unique (10).

4. Fraise (100) selon la revendication 2 **caractérisée en ce que** lesdits éléments de confinement (12) varient leur position d'une configuration fermée dans laquelle ils maintiennent lesdits outils amovibles (13) en position à une configuration ouverte dans laquelle il est possible **d'insérer** ou **d'enlever** lesdits outils amovibles (13).

5. Fraise (100) selon la revendication 4 **caractérisée en ce que** le passage de ladite configuration fermée à ladite configuration ouverte est réalisé par l'action d'un utilisateur sur des vis de réglage spécifiques (15) reliées auxdits éléments de confinement (12).

6. Fraise (100) selon la revendication 5 **caractérisée en ce que** lesdites vis de réglage (15) sont insérées dans de seconds sièges spéciaux (16) de manière à ce que lesdites vis de réglage (15) soient perpendiculaires aux éléments de confinement (12).

7. Fraise (100) selon l'une des revendications précédentes **caractérisée en ce que** ledit corps unique (10) présente un trou de passage (11) apte à permettre l'insertion dudit corps unique (10) dans ledit outil de travail (2).

8. Fraise (100) selon l'une des revendications précédentes **caractérisée en ce que** ledit corps unique (10) comporte des rainures (17) destinées à empêcher la sortie desdits outils amovibles (13) desdits éléments de confinement (12) lorsque ladite fraise (100) est en cours de travail.

9. Fraise (100) selon la revendication 8 **caractérisée en ce que** lesdites rainures (17) sont disposées verticalement à l'intérieur desdits premiers sièges (14).

10. Fraise (100) selon l'une des revendications précédentes, **caractérisée par le fait qu'**elle est particulièrement adaptée au traitement des cadres de fenêtres ou similaires.

11. Fraise (100) selon une ou plusieurs des revendications précédentes **caractérisée par** le fait de comporter au moins deux séries de sièges (16) configurés chacun pour loger une série correspondante d'outils amovibles (13), et **caractérisés par le fait que** chaque série d'outils amovibles (13') est configurée pour obtenir un traitement différent sur une pièce.

12. Fraise (100) selon l'une ou plusieurs des revendications précédentes **caractérisée en ce que** chacune des séries de sièges (16) est située à une coordonnée Z différente.

13. Fraise (100) selon l'une ou plusieurs des revendications précédentes **caractérisée en ce que** ledit corps de la fraise (10) est constitué d'une pluralité d'éléments sensiblement cylindriques superposés.

14. Fraise (100) selon l'une ou plusieurs des revendications précédentes **caractérisée en ce que** lesdits sièges (16) appartenant à la même série sont également espacés le long de la coordonnée 8.

15. Fraise (100) selon une ou plusieurs des revendications précédentes **caractérisée par le fait qu'**au moins un desdits sièges (16), et de préférence de ladite série de sièges (16) est fermé à la fois en haut et en bas.
